# EUROPÄISCHE PATENTSCHRIFT

(11) **EP 0 706 226 B1**
(45) Veröffentlichungstag und Bekanntmachung des Hinweises auf die Patenterteilung: **21.04.1999**
(21) Anmeldenummer: 95115300.6
(22) Anmeldetag: 28.09.1995
(51) Int. Cl.: H01L 41/09

(54) **Ultraschallmotor**
Ultrasonic motor
Moteurs à ultrasons

(30) Priorität: 07.10.1994 DE 4435882
(43) Veröffentlichungstag der Anmeldung: 10.04.1996
(73) Patentinhaber: ROBERT BOSCH GMBH, 70442 Stuttgart (DE)
(72) Erfinder: Heinz, Rudolf, Dr.-Ing., D-71272 Renningen (DE); Rehbein, Peter,Dr.-Ing., D-71254 Ditzingen (DE)

(56) Entgegenhaltungen:
- EP-A- 0 155 694

## Beschreibung

Die Erfindung betrifft einen Ultraschallmotor nach dem Oberbegriff des Anspruchs 1.

### Stand der Technik

Ultraschallmotoren sind als sogenannte Wanderwellenmotoren bekannt. Hierbei wird eine Piezokeramik mit einer sinusförmigen Spannung angeregt, aufgrund dessen die Piezokeramik eine mechanische Verformung erfährt. Diese mechanische Verformung wird ausgenutzt, um einen Reibschluß zwischen einem die Verformung übertragenden Mittel und einem beweglich gelagerten Körper zu erzielen. Hierbei sind sowohl Drehbewegungen eines Rotors eines Ultraschallmotors als auch Linearbewegungen eines Aktors eines linearen Ultraschallmotors erzeugbar.

Ein Ultraschallmotor der gattungsbildenden Art geht aus der EP 155 649 A2 hervor, bei dem zwei im Winkel von 90° zueinander wirkende Piezokeramikelemente einen Biegeschwinger in eine elliptische Bewegung versetzen. Die Piezokeramikelemente stehen mit dem Biegeschwinger über jeweils elastische Übertragungselement in Verbindung, wobei die Übertragungselement mit dem Biegeschwinger jeweils Biegefedern ausbilden. Die Übertragungselemente bildet eine in Polarisierungsrichtung des einen Piezokeramikelements eine steife und in Polarisierungsrichtung des anderen Piezokeramikelements eine weiche Aufhängung für das jeweilige Piezokeramikelement. Der die elliptische Bewegung ausführende Biegeschwinger treibt dabei einen rotierenden Aktor. Zur Erzeugung einer Linearbewegung eines Aktors ist eine weitere Ausführungsform angegeben, bei der die Übertragungselemente mit einem zusätzlichen Federelement verbunden sind, wobei die Übertragungselemente jeweils steif in Polarisierungsrichtung der Piezokeramikelemente ausgebildet sind.

Aus der DE-OS 33 06 755 ist ein linearer Ultraschallmotor bekannt, bei dem mittels Piezokeramikelementen in einem elastischen Körper eine Wanderwelle erzeugt wird, der einen mit dem Körper in Kontkat stehenden Aktor linear bewegt. Hierbei ist nachteilig, daß sich das oben angegebene Wanderwellenprinzip für lineare Antriebe nicht eignet.

Ein erfindungsgemäßer Ultraschallmotor mit den im Anspruch 1 genannten Merkmalen bietet demgegenüber den Vorteil, daß das piezoelektrische Antriebsprinzip zum Erzeugen einer linearen Bewegung eines Aktors ausgenutzt werden kann, ohne daß in einem Zwischenglied eine Wanderwelle erzeugt werden muß. Dadurch, daß die Piezokeramikelemente wenigstens einen Biegeschwinger in eine elliptische Bewegung ergebende Längs- und Querschwingungen versetzen, der mit Aktor in Reibkontakt steht, ist es sehr vorteilhaft möglich, über die elliptische Bewegung des Biegeschwingers den Aktor in eine Linearbewegung zu versetzen. Dadurch, daß zum Erzeugen der Linearbewegung keine Wanderwellen erzeugt und gesteuert werden müssen, kann über relativ robuste und unempfindliche Biegeschwinger sehr genau eine exakt gesteuerte Linearbewegung des Aktors erzeugt werden. Mittels der Biegeschwinger können große Kräfte beziehungsweise Drehmomente bei relativ niedrigen Bewegungsgeschwindigkeiten des Aktors erzeugt werden. Somit sind derartige Antriebe zum direkten Betätigen von Einrichtungen geeignet, ohne daß ein Getriebe zwischengeschaltet werden muß.

In vorteilhafter Ausgestaltung der Erfindung ist vorgesehen, daß mehrere Biegeschwinger, vorzugsweise mehrere symmetrisch zu dem Aktor angeordnete Biegeschwinger, mit diesen in Reibkontakt stehen. Durch die Anordnung einer Vielzahl von Biegeschwingern kann das Antriebsverhalten des gesamten Ultraschallmotors beruhigt werden. Darüber hinaus läßt sich so eine größere Kraft beziehungsweise ein größeres Drehmoment aufbringen. Ferner ist vorteilhaft, wenn mehrere in geeignetem Abstand zueinander angeordnete Biegeschwinger mit einer sinusförmigen Anregungsspannung phasenverschoben aktiviert werden. Durch diese Phasenverschiebung wird gewährleistet, daß der Aktor jederzeit antreibbar ist, auch wenn sich einzelne Biegeschwinger gerade in ihrem Totpunkt befinden.

Weitere vorteilhafte Ausgestaltungen der Erfindung ergeben sich aus den übrigen in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: schematisch eine Schnittdarstellung durch einen erfindungsgemäßen Ultraschallmotor;
- Figur 2: schematisch eine Schnittdarstellung eines Biegeschwingers nach einer weiteren Ausführungsform;
- Figur 3: schematisch eine Schnittdarstellung eines Ultraschallmotors nach einer weiteren Ausführung und
- Figur 4: schematisch eine perspektivische Ansicht eines Ultraschallmotors.

### Beschreibung der Ausführungsbeispiele

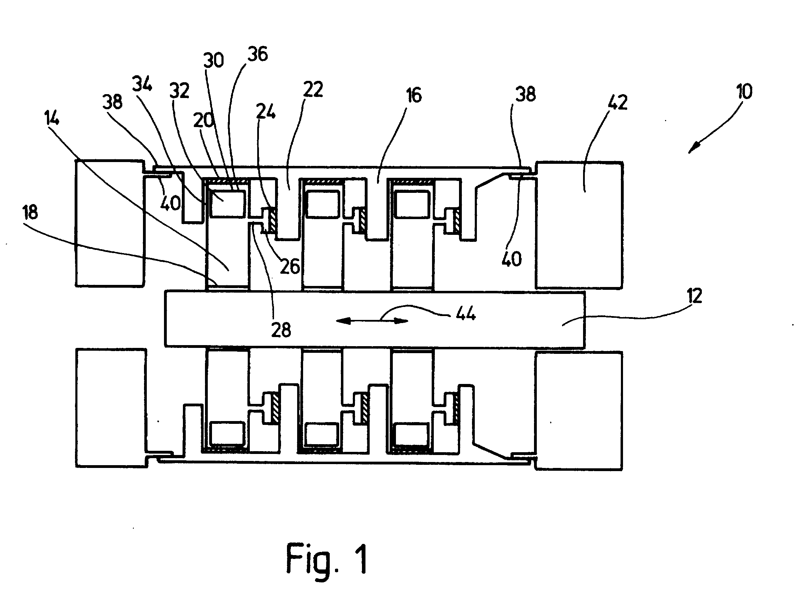

Figur 1 zeigt in einer schematischen Schnittdarstellung einen allgemein mit 10 bezeichneten Ultraschallmotor. Der Ultraschallmotor 10 besitzt einen linear bewegbaren Aktor 12, der mit nicht gezeigten Kraftübertragungsgliedern zusammenwirken kann. Der Aktor 12 ist zwischen Biegeschwingern 14 eingespannt. Im gezeigten Beispiel sind insgesamt sechs Biegeschwinger 14 angeordnet, wobei jeweils immer drei Biegeschwinger 14 gegenüberliegend symmetrisch angeordnet sind. Die Erfindung beschränkt sich jedoch nicht auf das dargestellte Ausführungsbeispiel, so sind insbesondere die Anordnung von weniger, das heißt wenigstens einem Biegeschwinger 14 oder auch mehrerer Biegeschwinger 14 möglich. Sollte beispielsweise nur ein Biegeschwinger 14 vorgesehen sein, ist der Aktor 12 durch entsprechende Lager linear beweglich gelagert. Aufgrund des symmetrischen Aufbaus des Ultraschallmotors 10 und der gleichen Ausgestaltung der Biegeschwinger 14 wird bei der weiteren Erläuterung jeweils nur auf einen Biegeschwinger 14 Bezug genommen, wobei klar ist, daß alle anderen Biegeschwinger 14 analog aufgebaut sind.

Die Biegeschwinger 14 besitzen eine in etwa quaderförmige Gestalt und sind zwischen dem Aktor 12 und einer Haltebrücke 16 angeordnet. Die Biegeschwinger 14 weisen eine Reibschicht 18 auf, mit der diese an dem Aktor 12 anliegen. Die Reibschicht 18 besteht beispielsweise aus einem Polymer, zum Beispiel einem speziellen Gleitlack oder einem speziellen Thermoplast. Zwischen den Biegeschwingern 14 und der Haltebrücke 16 ist ein erstes Piezokeramikelement 20 angeordnet. Das Piezokeramikelement 20 liegt dabei mit seiner einen Stirnfläche an der Haltebrücke 16 und mit seiner anderen Stirnfläche an dem Biegeschwinger 14 an. Das Piezokeramikelement 20 besitzt eine in Richtung des Biegeschwingers 14 gerichtete Polarisation. Von der Haltebrücke 16 gehen in Richtung des anzutreibenden Aktors 12 weisende Vorsprünge 22 ab, deren Länge so gewählt ist, daß diese die Biegeschwinger 14 etwa bis zur Hälfte übergreifen. An den Vorsprüngen 22 ist ein zweites Piezokeramikelement 24 angeordnet, das über einen Auflagebereich 26 und eine Biegefeder 28 mit dem Biegeschwinger 14 verbunden ist. Der Auflagebereich 26 und die Biegefeder 28 sind dabei vorzugsweise einstückig mit dem Biegeschwinger 14 ausgebildet. Das Piezokeramikelement 24 weist eine vom Vorsprung 22 in Richtung des Auflagebereichs 26 gerichtete Polarisation auf. Die Biegefeder 28 ist so dimensioniert, daß sie in Polarisationsrichtung des Piezokeramikelementes 24 steif ist und in Richtung der Polarisation des Piezokeramikelementes 20 weich aufgehängt ist. Die Piezokeramikelemente 20 und 24 sind demnach zu dem Biegeschwinger 14 so angeordnet, daß das Piezokeramikelement 20 in Längsrichtung des Biegeschwingers 14 und das Piezokeramikelement 24 in Querrichtung zu dem Biegeschwinger 14 wirkt. Der Biegeschwinger 14 besitzt in einem Kopfbereich 30 eine Aussparung 32, die den Biegeschwinger quer zur Polarisationsrichtung des Piezokeramikelementes 24 durchdringt. Durch die Ausbildung der Aussparung 32 weist der Biegeschwinger 14 in seinem Kopfbereich 30 als Biegefedern 34 ausgebildete, sich längs erstreckende Stege auf. Ein die Biegefedern 34 überspannender Kopfsteg 36 bildet gleichzeitig einen Auflagebereich für das Piezokeramikelement 20. Durch die im wesentlichen senkrecht verlaufenden Biegefedern 34 besitzen diese in Polarisierungsrichtung des Piezokeramikelementes 20 eine Steifigkeit und sind in Polarisierungsrichtung des Piezokeramikelementes 24 weich aufgehängt.

Die Haltebrücke 16 ist entsprechend der Anzahl der vorhandenen Biegeschwinger 14 mit den Vorsprüngen 22 ausgestattet. Die Haltebrücke 16 ist über Membranen 38 auf Haltestegen 40 gelagert. Die Haltestege 40 kragen dabei von einem Funktionsblock 42 des Ultraschallmotors 10 ab. Die Membranen 38 können auch mit den Haltestegen 40 eine zusammenhängende Einheit bilden, die wie eine Blattfeder wirkt. Der Ultraschallmotor 10 besitzt weiterhin hier im einzelnen nicht dargestellte Anschlußleitungen, mit denen die Piezokeramikelemente 20 und 24 an eine Spannungsquelle, insbesondere an eine Sinus-Spannungsquelle, anschließbar sind.

Der in Figur 1 gezeigte Ultraschallmotor 10 übt folgende Funktion aus:

Beim Anlegen einer Sinusspannung werden die Piezokeramikelemente 20 und 24 ebenfalls sinusförmig erregt. Durch diese Erregung kommt es in den Piezokeramikelementen 20 und 24 - in bekannter Art und Weise - zu mechanischen Verformungen, die auf den Biegeschwinger 14 übertragen werden. Das Piezokeramikelement 20 lenkt dabei den Biegeschwinger 14 in dessen Längsrichtung, das heißt, in Richtung auf den Aktor 12 aus, während das Piezokeramikelement 24 den Biegeschwinger 14 quer zu dessen Längsrichtung auslenkt. Durch eine Überlagerung der beiden von den Piezokeramikelementen 20 und 24 ausgehenden Schwingungen in dem Biegeschwinger 14 erfährt dieses eine elliptische Bewegung. Die elliptische Bewegung erfolgt dabei mit einer bestimmten Exzentrizität um einen von der Anordnung der Piezokeramikelemente 20 und 24 vorgegebenen Drehpunkt. Durch diese elliptische Bewegung des Biegeschwingers 14 wird über die Reibschicht 18 eine Reibkraft in tangentialer Richtung auf den Aktor 12 übertragen. Dieser erfährt somit eine Bewegung in linearer Richtung entsprechend dem in Figur 1 angedeuteten Doppelpfeil 44. Die lineare Bewegung des Aktors 12 erfolgt dabei selbstverständlich nur in einer Richtung, wobei durch den Doppelpfeil 44 angedeutet ist, daß durch eine entsprechende Ansteuerung, das heißt durch Vorgabe einer Phasenverschiebung der idealerweise sinusförmigen Anregungen der Piezokeramikelemente 20 und 24 die Richtung der linearen Bewegung des Aktors 12 frei wählbar ist. Dieser kann somit vorwärts und rückwärts linear bewegt werden. Die Höhe der Exzentrizität der elliptischen Bewegung des Biegeschwingers 14 ist über die die Anregung der Piezokeramikelemente 20 und 24 bewirkende Spannung einstellbar. Entsprechend der beispielsweisen Sinus-Spannung, wirkt das Piezokeramikelement 20 mit seiner mechanischen Verformung auf den Kopfsteg 36, der diese Bewegung über die Biegefedern 34 auf den Biegeschwinger 14 überträgt. Da die Biegefedern 34 in Längsrichtung des Biegeschwingers 14 beziehungsweise in Polarisierungsrichtung des Piezokeramikelementes 20 steif sind, wird diese Bewegung auf den Biegeschwinger 14 übertragen. Die Biegefeder 28 ist in Polarisierungsrichtung des Piezokeramikelementes 20 weich aufgehängt, so daß diese quasi wie ein Drehgelenk für die von dem Piezokeramikelement 20 ausgehende Bewegung wirkt. Die von dem Piezokeramikelement 24 hingegen ausgehende Verformung wirkt über den Aufnahmebereich 26 auf die Biegefeder 28, die in Richtung der Polarisierung des Piezokeramikelementes 24 steif ist, so daß diese Bewegung als Querkraft auf den Biegeschwinger 14 übertragen wird. Für die von dem Piezokeramikelement 24 ausgehende Bewegung bilden die Biegefedern 34, die in Polarisierungsrichtung des Piezokeramikelementes 24 weich aufgehängt sind, die Drehpunkte. Insgesamt wird somit durch eine Überlagerung der jeweils linearen, in Längs- und Querrichtung auf den Biegeschwinger 14 wirkenden, von den Piezokeramikelementen 20 beziehungsweise 24 ausgehenden Kräften die elliptische Bewegung des Biegeschwingers 14 erzeugt. Je nach Frequenz und Höhe der angelegten Spannung an den Piezokeramikelementen 20 und 24 kann die in Längs- und Querrichtung auf die Biegeschwinger 14 wirkenden, die elliptische Bewegungen erzeugenden Kräfte eingestellt werden. Gegebenenfalls können die Piezokeramikelemente 20 und die Piezokeramikelemente 24 von getrennten Spannungsquellen mit unterschiedlicher Frequenz und unterschiedlicher Spannungshöhe beaufschlagt werden, so daß sich weitere Varianten der Einstellung der elliptischen Bewegung des Biegeschwingers 14 ergeben. Die Biegeschwinger 14 selber bestehen aus einem gut schwingfähigem Werkstoff, idealerweise verunreinigungsarmen Metallen (zum Beispiel Kupferlegierungen, Aluminiumlegierungen, Federstähle, rostfreier Stahl, Silicium,...), aber auch Stahl ist möglich.

Bei dem in Figur 1 gezeigten Beispiel greifen insgesamt sechs identisch aufgebaute Biegeschwinger 14 den Aktor 12 an. Durch die symmetrisch gegenüberliegend angeordneten Biegeschwinger 14 wird der Aktor 12 in einem Gleichgewicht gehalten, so daß dieser ein im wesentlichen spielfreies Antriebsverhalten aufweist. Die Ansteuerung der Biegeschwinger 14 kann so erfolgen, daß die jeweils exakt gegenüberliegend angeordneten Biegeschwinger 14 mit einer gemeinsamen Spannung beaufschlagt werden, während die in Bewegungsrichtung 44 benachbart gegenüberliegend angeordneten Biegeschwinger 14 mit einer phasenverschobenen Spannung beaufschlagt werden. Durch diese Phasenverschiebung der Beaufschlagung zwischen den paarweise angeordneten Biegeschwingern 14 wird erreicht, daß der Aktor 12 in jedem Betriebszustand des Ultraschallmotors 10 angetrieben wird. Die nacheinander angeordneten Biegeschwinger 14 vollführen ihre elliptische Bewegung demnach zeitversetzt, so daß die in tangentialer Richtung auf den Aktor 12 übertragene Reibkraft ebenfalls zeitversetzt ansetzt und eine homogene Antriebsbewegung ermöglicht wird.

Die Haltebrücke 16 ist über die Membranen 38 auf den Haltestegen 40 so gelagert, daß die Biegeschwinger 14 in Richtung auf den Aktor 12 vorgespannt sind. Durch diese Vorspannung können mittels der Biegeschwinger 14 im Betrieb des Ultraschallmotors 10 größere tangentiale Reibkräfte auf den Aktor 12 übertragen werden. Weiterhin wird hierdurch gewährleistet, daß in einem nicht im Betrieb befindlichen Ultraschallmotor 10 der Aktor 12 von den Biegeschwingern 14 gehalten wird, indem dieser zwischen diesen eingespannt ist. Somit ist die zusätzliche Anordnung von Lagerelementen zur Führung des Aktors 12 nicht notwendig. Durch die Lagerung der Haltebrücke 16 über die Membranen 38 wird weiterhin erreicht, daß bei einem sich in Schwingung befindenden System die Haltebrücke 16 eine in einem anderen Fequenzbereich liegende Eigenschwingung aufweist als die Biegeschwinger 14. Indem die Masse der Haltebrücke 16 gegenüber der Masse der Biegeschwinger 14 relativ groß ist, wird die Einhaltung dieser unterschiedlichen Eigenschwingungen mit unterschiedlichen Eigenfrequenzen unterstützt.

Zusätzlich zu den gezeigten Elementen des Ultraschallmotors 10 können zwischen den Funktionsblöcken 42 und dem Aktor 12 weitere, nicht dargestellte, Piezokeramikelemente angeordnet sein, die auf den Aktor 12 synchronisiert zu den Biegeschwingern 14 wirken. Diese zusätzlichen Piezokeramikelemente können insbesondere im Ruhestand des Ultraschallmotors 10 die Lagefixierung des Aktors 14 verbessern.

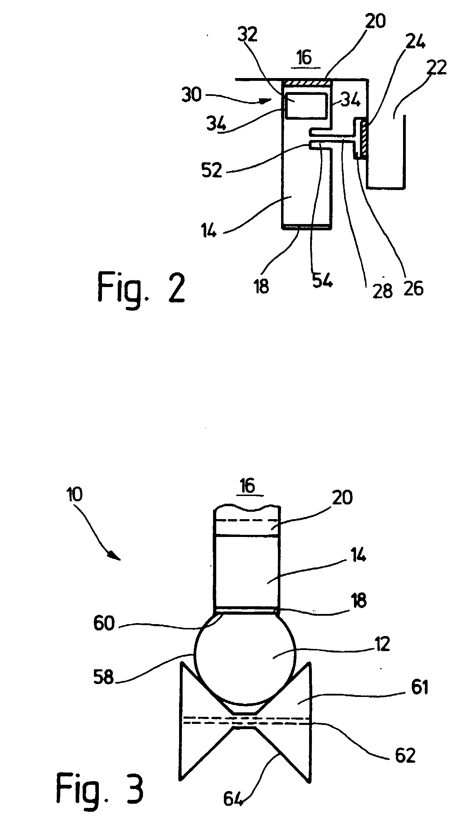

In Figur 2 ist eine weitere Ausgestaltungsvarianten der Aufhängung der Biegeschwinger 14 zwischen der Haltebrücke 16 und dem Aktor 12 dargestellt. Gleiche Teile wie in Figur 1 sind mit gleichen Bezugszeichen versehen und hier nicht nochmals erläutert. In Figur 2 ist lediglich beispielhaft eine weitere Möglichkeit gezeigt, mit denen der Biegeschwinger 14 in eine elliptische Bewegung versetzt werden kann, wobei die Piezokeramikelemente 20 und 24 den Biegeschwinger 14 jeweils mit einer linearen Kraft beaufschlagen. Neben den gezeigten Beispielen ist jede andere Aufhängung der Biegeschwinger 14 möglich, die das Umsetzen der linearen Krafteinleitung in eine elliptische Bewegung gestatten.

Der Kopfbereich 30 des Biegeschwingers 14 gemäß Figur 2 weist die bereits in Figur 1 erwähnten Biegefedern 34 auf, die in Längsrichtung des Biegeschwingers 14 steif aufgehängt sind. Die Biegefeder 28 greift hier wiederum an den Grund 52 des Einschnitts 54 an. Trotz des teilweise unterschiedlichen Aufbaus sind hier die gleiche Funktion bewirkenden Teile mit gleichen Bezugszeichen versehen. Der Einschnitt 54 kann die in Figur 2 gezeigte rechteckige Form oder eine trapezförmige Form aufweisen cder gekrümmt sein. Der Grund 52 ist in etwa symmetrisch zu den Biegefedern 34 angeordnet. Insgesamt kann durch die Auswahl der Aufhängung des Biegeschwingers 14 über die Biegefedern 28, 48, 56 beziehungsweise die Biegefedern 34 der Drehpunkt, die Exzentrizität, die Eigenschwingungen und Resonanzen und somit die Schwingungsamplituden der Biegeschwinger 14 konstruktiv vorgegeben werden. So steht zusätzlich zu der Ansteuermöglichkkeit der Piezokeramikelemente 20 und 24 über unterschiedliche Sinusspannungen, das heißt Spannungen unterschiedlicher Höhe mit unterschiedlicher Frequenz, eine zusätzliche Ausgestaltungsmöglichkeit zur Erzeugung der elliptischen Eewegungen der Biegeschwinger 14 zur Verfügung.

Figur 3 zeigt in einem schematischen Querschnitt durch einen Ultraschallmotor 10 eine weitere Ausführungsvariante. Trotz des teilweise unterschiedlichen Aufbaus sind wiederum gleiche Teile wie in Figur 1 mit gleichen Bezugszeichen versehen. Der anzutreibende Aktor 12 wird hier durch einen angeschnittenen zylindrischen Körper 58 gebildet. Der Anschnitt 60 des Körpers 58 ist so gelegt, daß auf diesen die Reibschichten 18 der Biegeschwinger 14 zu liegen kommen. In dem hier gezeigten Beispiel sind lediglich oberhalb des Aktors 12 wenigstens ein, vorzugsweise aber mehrere Biegeschwinger 14 entsprechend dem in den Figuren 1 und 2 gezeigten Aufbau angeordnet. Als Gegenlager für den Aktor 12 dienen hier unterhalb des Aktors 12 angeordnete Rollenlager 61, die auf einer Drehachse 62 drehbar gelagert sind und einen kegelförmigen Einschnitt 64 aufweisen, der zur Aufnahme des Aktors 12 dient. Beim Betrieb des hier dargestellten Ultraschallmotors 10 wird der Aktor 12 entsprechend der in Figur 1 angegebenen Pfeilrichtung 44 linear bewegt, so daß dieser sich über die Rollenlager 61 verschiebt. Bei der linearen Bewegung des Aktors 12 verdrehen sich die Rollenlager 61 um ihre Drehachse 62, so daß eine bewegliche Führung für den Aktor 12 gegeben ist.

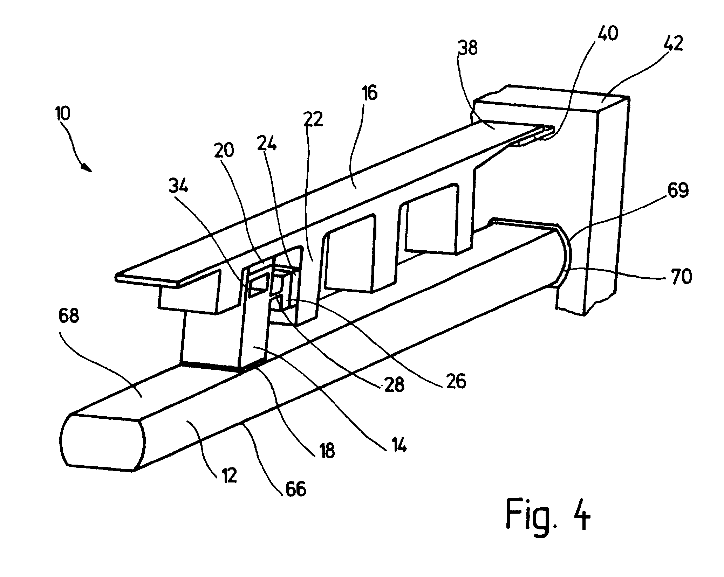

In der Figur 4 ist eine perspektivische Teilansicht des in Figur 1 gezeigten Ultraschallmotors 10 dargestellt. Anhand der perspektivischen Ansicht soll der Aufbau des Ultraschallmotors 10 nochmals verdeutlicht werden, wobei hier lediglich ein Biegeschwinger 14 eingezeichnet ist. In der Figur 5 wird insbesondere deutlich, daß der Aktor 12 einen zylindrischen Grundkörper 66 aufweisen kann, der dem Biegeschwinger 14 zugeordnete Albflachungen 68 aufweist. Anhand der perspektivischen Ansicht wird ebenfalls die quaderförmige Form der Biegeschwinger 14 deutlich, die von der Aussparung 32 durchgriffen werden. Zur Führung des Aktors 12 kann der Funktionsblock 42 einen Durchbruch 69 aufweisen, dessen Form der des Aktors 12 angepaßt ist. In einen verbleibenden Spalt 70 zwischen dem Funktionsblock 42 und dem Aktor 12 können die bereits zu Figur 1 erwähnten zusätzlichen Piezokeramikelemente angeordnet sein, die eine Haltefunktion für den Aktor 12 bei nicht in Betrieb befindlichem Ultraschallmotor 10 übernehmen.

In den gezeigten Ausführungsbeispielen sind als Aktoren für die Erzeugung der elliptischen Bewegung der Biegeschwinger 14 die Piezokeramikelemente 20 beziehungsweise 24 angeordnet. Diese können beispielsweise auch durch Terfenol-Aktoren oder Multilayer-Piezo-Aktoren (Stacks) ersetzt werden. Diese ebenfalls allgemein bekannten Schwingungselemente sind zum Erzeugen der elliptischen Bewegung der Biegeschwinger 14 insbesondere mit großen Amplituden geeignet.

## Patentansprüche

1. Ultraschallmotor zur Bewegung eines Aktors (12), mit einem Biegeschwinger (14), der von zwei im wesentlichen senkrecht zueinander wirkenden Piezokeramikelementen (20, 24) in eine elliptische Bewegung versetzt wird und mit dem Aktor (12) in Reibkontakt steht, wobei die Einwirkung der Piezokeramikelemente (20, 24) auf den Biegeschwinger (14) über eine erste Biegefeder (34) und eine zweite Biegefeder (24) erfolgt, die jeweils senkrecht zur Polarisierungsrichtung des zugehörigen Piezokeramikelementes (20, 24) elastisch sind, und wobei die erste Biegefeder (34) eine in Polarisierungsrichtung des ersten Piezokeramikelements (20) steife und in Polarisationsrichtigung des zweiten Piezokeramikelements (24) weiche Aufhängung sowie die zweite Biegefeder (28) eine in Polarisierungsrichtung des zweiten Piezokeramikelements (24) steife und in Polarisierungsrichtung des ersten Piezokeramikelements (20) weiche Aufhängung aufweist, **dadurch gekennzeichnet,** daß der Biegeschwinger (14) einen Kopfbereich (30) aufweist, an dem zumindest das erste Piezokeramikelement (20) angreift, daß am Kopfbereich (30) der Biegeschwinger (14) zur Ausbildung der ersten Biegefeder (34) eine im wesentlichen rechteckige Aussparung besitzt, so daß sich eine doppelte, blattfederartige Biegefeder (34) am Kopfbereich (30) ausbildet, daß der Aktor eine Linearbewegung ausführt, und daß in Längserstreckung der blattfederartigen Biegefeder (34) das mit seiner Polarisierungsrichtung senkrecht zur linearen Bewegungsrichtung des Aktors wirkende erste Piezokeramikelement (20) und in Quererstreckung der blattfederartigen Biegefeder (34) das mit seiner Polarisierungsrichtung in der linearen Bewegungsrichtung des Aktors wirkende zweite Piezokeramikelement (24) angreift.

2. Ultraschallmotor nach einem der vorhergehenden Ansprüche, **dadurch gekennzeichnet,** daß die Piezokeramikelemente (20, 24) an einer Haltebrücke (16) angeordnet sind, deren Eigenschwingung in einem anderen Frequenzbereich liegt als die Eigenschwingung des Biegeschwingers (14).

3. Ultraschallmotor nach einem der vorhergehenden Ansprüche, **dadurch gekennzeichnet**, daß die Haltebrücke (16) über eine Membran (38) schwingend gelagert ist.

4. Ultraschallmotor nach einem der vorhergehenden Ansprüche, **dadurch gekennzeichnet**, daß eine Schwingungsamplitude und/oder eine Exzentrizität und/oder ein Drehpunkt des Biegeschwingers (14) durch Anlenkpunkte der Biegefedern (34, 28, 48, 56) zusätzlich zu einer durch eine Variation einer Anregungsspannung der Piezokeramikelemente (20, 24) einstellbar sind.

5. Ultraschallmotor nach einem der vorhergehenden Ansprüche, **dadurch gekennzeichnet**, daß dem Aktor (12) symmetrisch angeordnete, synchron betreibbare Biegeschwinger (14) zugeordnet sind.

6. Ultraschallmotor nach einem der vorhergehenden Ansprüche, **dadurch gekennzeichnet**, daß die Piezokeramikelemente (20, 24) von in Linearbewegung (44) beabstandet zueinander angeordneten Biegeschwingern (14) mit einer phasenverschobenen Aktivierungsspannung beaufschlagbar sind, so daß ein gleichförmiger Antrieb ermöglicht wird.

## Claims

1. Ultrasonic motor for moving an actuator (12), having a flexural vibrator (14), which is caused to execute an elliptic movement by two piezoceramic elements (20, 24) acting essentially perpendicular to one another and is in frictional contact with the actuator (12), the action of the piezoceramic elements (20, 24) on the flexural vibrator (14) being performed via a first torsion spring (34) and a second torsion spring (28) which in each case are elastic perpendicular to the direction of polarisation of the associated piezoceramic element (20, 24), and the first torsion spring (34) having a suspension which is stiff in the direction of polarisation of the first piezoceramic element (20) and soft in the direction of polarisation of the second piezoceramic element (24), and the second torsion spring (28) having a suspension which is stiff in the direction of polarisation of the second piezoceramic element (24) and is soft in the direction of polarisation of the first piezoceramic element (20), characterized in that the flexural vibrator (14) has a head region (30) on which at least the first piezoceramic element (20) acts, in that on the head region (30) the flexural vibrator (14) has an essentially rectangular cutout for constructing the first torsion spring (34), with the result that a double torsion spring (34) resembling a leaf spring is constructed on the head region (30), in that the actuator executes a linear movement, and in that the first piezoceramic element (20), which acts with its direction of polarisation perpendicular to the linear direction of movement of the actuator, acts in the longitudinal extent of the torsion spring (34) resembling a leaf spring, and the second piezoceramic element (24), which acts with its direction of polarisation in the linear direction of movement of the actuator, acts in the transverse extent of the torsion spring (34) resembling a leaf spring.

2. Ultrasonic motor according to one of the preceding claims, characterized in that the piezoceramic elements (20, 24) are arranged on a holding bridge (16) whose natural vibration is in a different frequency band than the natural vibration of the flexural vibrator (14).

3. Ultrasonic motor according to one of the preceding claims, characterized in that the holding bridge (16) is mounted in a vibrating fashion via a diaphragm (38).

4. Ultrasonic motor according to one of the preceding claims, characterized in that it is possible to set a vibration amplitude and/or an eccentricity and/or a fulcrum of the flexural vibrator (14) by means of pivot points of the torsion springs (34, 28, 48, 56) by varying an exciting voltage of the piezoceramic elements (20, 24).

5. Ultrasonic motor according to one of the preceding claims, characterized in that symmetrically arranged, synchronously operable flexural vibrators (14) are assigned to the actuator (12).

6. Ultrasonic motor according to one of the preceding claims, characterized in that a phase-shifted activation voltage can be applied to the piezoceramic elements (20, 24) by flexural vibrators (14) arranged at a spacing from one another in a linear movement (44), thus permitting a more uniform drive.

## Revendications

1. Moteur à ultrasons pour déplacer un actionneur (12), comprenant un oscillateur de flexion (14) mu dans un mouvement elliptique par deux éléments piézocéramiques (20, 24) agissant essentiellement de manière perpendiculaire l'un par rapport à l'autre, et en contact de frottement avec l'actionneur (12),
- l'action des éléments piézocéramiques (20, 24) sur l'oscillateurs de flexion (14) se faisant par l'intermédiaire d'un premier ressort de flexion (34) et d'un second ressort de flexion (24), ces deux ressorts élastiques étant perpendiculaires à la direction de polarisation de l'élément piézocéramique correspondant (20, 24) et,
- le premier ressort de flexion (34) ayant une suspension rigide dans la direction de polarisation du premier élément piézocéramique (20) et une suspension souple dans la direction de polarisation du second élément piézocéramique (24),
- le second ressort de flexion (28) ayant une suspension rigide dans la direction de polarisation du second élément piézocéramique (24) et une suspension souple dans la direction de polarisation du premier élément piézocéramique (20),
caractérisé en ce que
- l'oscillateur de flexion (14) comporte une tête (34) sur laquelle agit au moins le premier élément piézocéramique (20),
- la tête (30) de l'oscillateur de flexion (14) possède une découpe essentiellement rectangulaire pour former le premier ressort de flexion (34), pour obtenir un double ressort de flexion (34) en forme de ressort lame dans la zone de la tête (30), pour que l'actionneur exécute un mouvement linéaire,
- dans la direction longitudinale des ressorts de flexion (34) en forme de ressorts lames agit le premier élément piézocéramique (20) dont la direction de polarisation est perpendiculaire à la direction de mouvement linéaire de l'actionneur et,
- dans la direction transversale des ressorts de flexion (34) en forme de ressorts lames agit le second élément piézocéramique (24) dont la direction de polarisation agit dans la direction de mouvement linéaire de l'actionneur.

2. Moteur à ultrasons selon la revendication 1,
caractérisé en ce que
les éléments piézocéramiques (20, 24) sont montés sur un pont de support (16) dont l'oscillation propre est située dans une autre plage de fréquences que l'oscillation propre de l'oscillateur de flexion (14).

3. Moteur à ultrasons selon l'une des revendications précédentes,
caractérisé en ce que
le pont de support (16) est monté de manière flottante par une membrane (38).

4. Moteur à ultrasons selon l'une quelconque des revendications précédentes,
caractérisé en ce que
l'amplitude d'oscillation et/ou l'excentricité et/ou le point de rotation de l'oscillateur de flexion (14) sont réglés par le point d'action des ressorts lames (34, 28, 48, 56) en plus d'une variation de la tension d'excitation des éléments piézocéramiques (20, 24).

5. Moteur à ultrasons selon l'une des revendications précédentes,
caractérisé en ce que
les oscillateurs de flexion (14) entraînés en synchronisme sont associés de manière symétrique à l'actionneur (12).

6. Moteur à ultrasons selon l'une quelconque des revendications précédentes,
caractérisé en ce que
les éléments piézocéramiques (20, 24) reçoivent une tension d'activation déphasée pour les oscillateurs de flexion (14) distants les uns des autres pour le mouvement linéaire (44) pour permettre un entraînement régulier.
